# EUROPEAN PATENT SPECIFICATION

(11) **EP 4 214 068 B1**
(45) Date of publication and mention of the grant of the patent: **25.12.2024**
(21) Application number: 21765879.8
(22) Date of filing: 18.08.2021
(51) Int. Cl.: B60C 1/00, C08L 7/00

(54) **PNEUMATIC TYRE TREAD**
LUFTREIFENLAUFFLÄCHE
BANDE DE ROULEMENT DE PNEUMATIQUE

(30) Priority: 24.08.2020 IT 202000020356
(43) Date of publication of application: 26.07.2023
(73) Proprietor: Bridgestone Europe NV/SA, 1930 Zaventem (BE)
(72) Inventor: FORTE, Gianluca, 00128 Roma (IT); RICCIO, Valeria, 00128 Roma (IT)
(74) Representative: Marchetti, Alessio
(86) International application number: PCT/EP2021/072914
(87) International publication number: WO 2022/043152

(56) References cited:
- US-A1- 2009 137 701
- US-A1- 2009 137 718

## Description

The present invention relates to a pneumatic tyre tread; in particular, to a tread for TBR pneumatic tyres.

The abbreviation "TBR" is an acronym for the English wording "Truck & Bus Radial tyre".

For some time now, also in the field of TBR pneumatic tyres, part of the research is aimed at improving the performance thereof in terms of rolling resistance. For examples, US 2009/137718 A1 and US 2009/137701 A1 relate to a rubber composition for tire treads having an improved balance between low fuel consumption, grip property and capability of suppressing crack generation in a tread groove bottom while maintaining abrasion resistance.

As is known to persons skilled in the art, a solution for improving the rolling resistance of a pneumatic tyre tread is related to an increase in the amount of silica within the relative rubber compound.

However, an increase in the amount of silica within the compound necessarily results in a decrease in wear resistance and manufacturability.

As immediately expected, a significantly higher level of wear resistance is necessarily required for TBR pneumatic tyres compared to passenger pneumatic tyres.

From the above it is obvious that for TBR pneumatic tyres any deterioration in terms of wear resistance by virtue of an improvement in terms of rolling resistance cannot possibly be accepted.

Furthermore, the above-mentioned disadvantages in terms of wear resistance are felt more if they relate to pneumatic tyres for driving wheels. In fact, as may appear obvious to a person skilled in the art, driving wheels have a wear dynamic that is different than trailer wheels, insofar as they are subjected to higher torque both under traction and when braking and at a high slip ratio.

The need was therefore felt to have a solution for the tread compounds of pneumatic tyres that would ensure an improvement in terms of rolling resistance without thereby worsening the wear resistance and/or impairing the manufacturability of the related compound.

The inventors of the present invention have surprisingly found that the use of a compound with a combination of suitably functionalized liquid polybutadiene, together with a mixture of three fillers, makes it possible to implement a tread wherein the requirement above is met.

The object of the present invention is a pneumatic tyre tread compound comprising a cross-linkable unsaturated chain polymeric base comprising at least 50% by weight of natural rubber (NR), a mixture of fillers comprising silica and carbon black and a vulcanization system; said compound being characterized in that it comprises from 0.5 to 15 phr of a functionalized liquid polybutadiene having an average molecular weight greater than 3000 Da and by the fact that said mixture of fillers comprises 40-60% by weight of a first carbon black having a surface area of greater than 110 m²/g, 10-20% by weight of a second carbon black having a surface area of between 70 and 90 m²/g and 30-55% by weight of a silica having a surface area of greater than 160 m²/g;
said liquid polybutadiene being functionalized with groups selected from hydroxyl, carboxylic, amine, epoxy, silane, silanol, aminosiloxane, and mercaptane.

Here and hereinafter, the term "cross-linkable unsaturated chain polymeric base" refers to any natural or synthetic non cross-linked polymer capable of assuming all of the chemical-physical and mechanical characteristics typically assumed by elastomers upon cross-linking (vulcanization) by means of cross-linking agents, for example sulfur.

Here and hereinafter, the term "vulcanization system" refers to a complex of ingredients comprising at least one cross-linking agent, for example sulfur and accelerating compounds, which, in the preparation of the compound, are added during a final mixing step and which have the purpose of promoting the vulcanization of the polymeric base.

Preferably said first carbon black has a surface area of between 110 and 140 m²/g.

Preferably, said mixture of fillers comprises 40-50% by weight of the first carbon black, 10-15% by weight of the second carbon black, and 35-50% by weight of the silica.

Preferably, the cross-linkable unsaturated chain polymeric base comprises polybutadiene.

Preferably, the compound is aimed at the preparation of the tread of a TBR pneumatic tyre.

A further object of the present invention is a tread obtained using the compound that is an object of the present invention.

A still further object of the present invention is a pneumatic tyre comprising a tread manufactured using the compound, the object of the present invention.

The following are purely illustrative and non-limiting exemplary embodiments.

### EXAMPLES

Seven tread compounds were made, wherein the first six compounds are comparative examples and the seventh compound is a compound according to the specifications of the present invention.

In particular, the first comparison compound (A) anticipates the addition of silica to a compound normally used for the production of TBR pneumatic tyre treads and is considered to be a reference compound for evaluating rolling resistance, wear resistance and manufacturability; the second, the third and the fourth comparison compounds (B - D) are compounds devoid of the liquid polybutadiene and with a mixture of various fillers; the fifth comparison compound (E) is the same as compound D with the difference that process oil has been added; the sixth comparison compound (F) is the same as compound A (a mixture of fillers that is not according to the invention) with the difference that liquid polybutadiene has been added. The compound according to the invention (G) is the same as compound D (a mixture of fillers according to the invention) with the difference that, according to the invention, liquid polybutadiene has been added.

Herebelow, the procedure is given for the preparation of the compounds described in the examples. This procedure does not represent a limitation for the present invention.

The term "Intermesh Mixer" refers to a machine for mixing rubber as described and claimed in US5368383.

The term "non-productive mixing step" refers to a mixing step during which the ingredients of the compound, excluding the vulcanization system, are added and mixed with the cross-linkable unsaturated chain polymeric base; while the term "productive mixing step" refers to a mixing step during which the vulcanization system is added and mixed with the mixture under preparation.

### - preparation of the compounds -

### (1^{st} non-productive mixing step)

Before mixing, a first mixing chamber of a 5 liter "Intermesh Mixer" was loaded with the ingredients listed in Tables I and II with the exception of the sulfur, stearic acid and the accelerant, with a fill factor of 60-70%.

This first mixing step was performed while maintaining a temperature of 140°C for 60 seconds.

### (2^{nd} non-productive mixing step)

The mixture from the first step was discharged into a second 5 liter chamber of the Intermesh mixer, reaching a fill factor of 35-41%.

This second mixing step was performed while maintaining a temperature of 155°C for 210 seconds.

### (productive mixing step)

The mixture obtained from the second non-productive mixing step was discharged into a 2 liter tangential rotor mixer, and to it were added sulfur, stearic acid and an accelerant, reaching a fill factor equal to 70%.

The mixer was operated at a speed of 20-40 rpm, and the resulting mixture was unloaded upon reaching a temperature of 100-110°C.

Tables I and II show the compositions in phr of the compounds of the examples.

**TABLE I**

| | A | B | C | D |
|---|---|---|---|---|
| NR | 80 | 80 | 80 | 80 |
| BR | 20 | 20 | 20 | 20 |
| First carbon black | 36 | 26 | 16 | 28 |
| Second carbon black | -- | 10 | 10 | 8 |
| Silica | 20 | 20 | 30 | 20 |
| Process Oil | -- | -- | -- | -- |
| Liquid polybutadiene | -- | -- | -- | -- |
| Sulfur | 1 | 1 | 1 | 1 |
| Stearic acid | 3.5 | 3.5 | 3.5 | 3.5 |
| Accelerant | 1.6 | 1.6 | 1.6 | 1.6 |

**TABLE II**

| | E | F | G |
|---|---|---|---|
| NR | 80 | 80 | 80 |
| BR | 20 | 20 | 20 |
| First carbon black | 28 | 36 | 28 |
| Second carbon black | 8 | -- | 8 |
| Silica | 20 | 20 | 20 |
| Process Oil | 5 | -- | -- |
| Liquid polybutadiene | -- | 5 | 5 |
| Sulfur | 1 | 1 | 1 |
| Stearic acid | 3.5 | 3.5 | 3.5 |
| Accelerant | 1.6 | 1.6 | 1.6 |

| | | | |
|---|---|---|---|
| NR is a 1,4-cis-polyisoprene rubber of natural origin. BR is a butadiene rubber with a content of at least 40% of 1,4-cis. The first carbon black has a surface area of 138 m²/g. The second carbon black has a surface area of 78 m²/g. The silica used has a surface area of 200 m²/g The process oil used is RAE oil The liquid polybutadiene used is EVONIK polyvest St-E60 having an average molecular weight of 3200 Da and is functionalized with silanol groups at the end of the polymeric chains The vulcanization accelerant used is mercaptobenzothiazole disulfide (MBTS). | | | |

The compounds in Table I were subjected to a series of tests in order to evaluate those properties related to rolling resistance, road holding, abrasion resistance and manufacturability.

The wear resistance was measured according to the ISO 4649 standard, while the rolling resistance was measured according to the ISO 4664 standard. In particular, as is known to a person skilled in the art, the rolling resistance parameter is evaluated as a function of the tanδ values (the lower the tanδ value, the better the rolling resistance).

The manufacturability was evaluated as a function of the viscosity parameters (measured according to the ASTM 1646 standard) and of the "slab appearance and extrusion"

Slab appearance and extrusion is defined as a parameter to be judged by the operator (YES or NO) and refers substantially to the roughness of the slab exiting from the Banbury discharge cowl. Excessive roughness can lead both to breakage of the slab and to problems in terms of productivity resulting from insufficient heating during the extrusion step, with consequent action on the part of the operator in order to restore the correct flow of rubber during the various steps of the extrusion process.

Table III shows the results obtained from the above tests. The results in relation to rolling resistance, wear resistance and viscosity are expressed in indexed form on the basis of the results obtained from the comparison compound (A). For the rolling resistance and the wear resistance, the greater the value of the result, the better the performance obtained. For the viscosity, the lower the value of the result, the better the performance obtained.

**TABLE III**

| | A | B | C | D | E | F | G |
|---|---|---|---|---|---|---|---|
| Rolling resistance | 100 | 103 | 105 | 103 | 80 | 105 | 110 |
| Wear resistance | 100 | 85 | 70 | 105 | 80 | 90 | 100 |
| Viscosity | 100 | 95 | 115 | 96 | 80 | 85 | 85 |
| slab appearance and extrusion | NO | NO | NO | NO | YES | YES | YES |

As is evident from the data reported in Table III, the compound made according to the specifications of the present invention (G) is capable, by means of the combined use of the particular liquid polybutadiene and the particular mixture of fillers, of ensuring a significant improvement in terms of rolling resistance, without, as a result, adversely affecting the wear resistance or manufacturability.

In this respect, it should be emphasized how compounds B and D, notwithstanding that they comprise the mixture of fillers according to the invention, do not give the desired results due to the absence of liquid polybutadiene according to the invention.

Compound E shows, however, that, notwithstanding the use of a mixture of fillers according to the invention, the presence of process oil in place of the liquid polybutadiene according to the invention cannot ensure the sought-after levels of rolling resistance and wear resistance.

Finally, compound F shows that the use of liquid polybutadiene according to the invention, when combined with a mixture of fillers that do not meet the specifications of the present invention, cannot ensure the sought-after levels of wear resistance.

## Claims

1. Pneumatic tyre tread compound comprising a cross-linkable unsaturated chain polymeric base comprising at least 50% by weight of natural rubber (NR), a mixture of fillers comprising silica and carbon black and a vulcanization system; said compound being **characterized in that** it comprises from 0.5 to 15 phr of a functionalized liquid polybutadiene having an average molecular weight greater than 3000 Da; and **in that** said mixture of fillers comprises 40-60% by weight of a first carbon black having a surface area of greater than 110 m²/g, 10-20% by weight of a second carbon black having a surface area of between 70 and 90 m²/g and 30-55% by weight of a silica having a surface area of greater than 160 m²/g;
said liquid polybutadiene being functionalized with groups selected from hydroxyl, carboxylic, amine, epoxy, silane, silanol, aminosiloxane and mercaptane.

2. Compound according to claim 1, **characterized in that** said first carbon black has a surface area of between 110 and 140 m²/g.

3. Compound according to claim 1 or 2, **characterized in that** said mixture of fillers comprises 40-50% by weight of the first carbon black, 10-15% by weight of the second carbon black and 35-50% by weight of the silica.

4. Compound according to one of the preceding claims, **characterized in that** the cross-linkable unsaturated chain polymeric base comprises polybutadiene.

5. Compound according to one of the preceding claims, **characterized in that** it is aimed at the preparation of the tread for truck and bus radial pneumatic tyres.

6. Tread made using the compound according to one of the preceding claims.

7. Pneumatic tyre comprising a tread according to claim 6.

8. Pneumatic tyre according to claim 7, **characterized in that** it is a truck and bus radial pneumatic tyre.

## Patentansprüche

1. Luftreifenlaufflächenmischung, umfassend eine vernetzbare ungesättigte Kettenpolymerbasis, umfassend zu mindestens 50 Gew.-% Naturkautschuk (NR), eine Mischung von Füllstoffen, umfassend Kieselerde und Ruß, und ein Vulkanisationssystem; wobei die Mischung **dadurch gekennzeichnet, ist, dass** sie von zu 0,5 bis 15 phr ein funktionalisiertes flüssiges Polybutadien, das ein durchschnittliches Molekulargewicht von über 3000 Da aufweist, umfasst; und dass die Mischung von Füllstoffen zu 40-60 Gew.-% einen ersten Ruß, der eine Fläche von über 110 m²/g aufweist, zu 10-20 Gew.-% einen zweiten Ruß, der eine Fläche von zwischen 70 und 90 m²/g aufweist, und zu 30-55 Gew.-% eine Kieselerde, die eine Fläche von über 160 m²/g aufweist, umfasst;
wobei das flüssige Polybutadien mit Gruppen, die aus Hydroxyl, Carboxyl, Amin, Epoxid, Silan, Silanol, Aminosiloxan und Mercaptan ausgewählt sind, funktionalisiert ist.

2. Mischung nach Anspruch 1, **dadurch gekennzeichnet, dass** der erste Ruß eine Fläche von zwischen 110 und 140 m²/g aufweist.

3. Mischung nach Anspruch 1 oder 2, **dadurch gekennzeichnet, dass** die Mischung von Füllstoffen zu 40-50 Gew.-% den ersten Ruß, zu 10-15 Gew.-% den zweiten Ruß und zu 35-50 Gew.-% die Kieselerde umfasst.

4. Mischung nach einem der vorstehenden Ansprüche,
**dadurch gekennzeichnet, dass** die vernetzbare ungesättigte Polymerkettenbasis Polybutadien umfasst.

5. Mischung nach einem der vorstehenden Ansprüche,
**dadurch gekennzeichnet, dass** sie als die Vorbereitung der Lauffläche für Radialluftreifen für Lastkraftwagen und Busse dient.

6. Lauffläche, die unter Verwendung der Mischung nach einem der vorstehenden Ansprüche hergestellt wird.

7. Luftreifen, umfassend eine Lauffläche nach Anspruch 6.

8. Luftreifen nach Anspruch 7, **dadurch gekennzeichnet, dass** er ein Radialluftreifen für Lastkraftwagen und Busse ist.

## Revendications

1. Composé de bande de roulement de pneumatique comprenant une base polymère à chaîne insaturée réticulable comprenant au moins 50 % en poids de caoutchouc naturel (NR), un mélange de charges comprenant de la silice et du noir de carbone et un système de vulcanisation ; ledit composé étant **caractérisé en ce qu'il** comprend de 0,5 à 15 pce d'un polybutadiène liquide fonctionnalisé ayant un poids moléculaire moyen supérieur à 3 000 Da ; et **en ce que** ledit mélange de charges comprend de 40 à 60 % en poids d'un premier noir de carbone ayant une surface supérieure à 110 m²/g, de 10 à 20 % en poids d'un second noir de carbone ayant une surface comprise entre 70 et 90 m²/g et entre 30 à 55 % en poids d'une silice ayant une surface supérieure à 160 m²/g ;
ledit polybutadiène liquide étant fonctionnalisé par des groupes choisis parmi les groupes hydroxyle, carboxylique, amine, époxy, silane, silanol, aminosiloxane et mercaptane.

2. Composé selon la revendication 1, **caractérisé en ce que** ledit premier noir de carbone a une surface spécifique supérieure ou égale à 110 et 140 m²/g.

3. Composé selon la revendication 1 ou 2, **caractérisé en ce que** ledit mélange de charges comprend de 40 à 50 % en poids du premier noir de carbone, de 10 à 15 % en poids du second noir de carbone et de 35 à 50 % en poids de la silice.

4. Composé selon l'une quelconque des revendications précédentes, **caractérisé en ce que** la base polymère réticulable à chaîne insaturée comprend du polybutadiene.

5. Composé selon l'une quelconque des revendications précédentes, **caractérisé en ce qu'**il est destiné à la préparation de la bande de roulement des pneumatiques radiaux de camions et d'autobus.

6. Bande de roulement fabriquée à l'aide du composé selon l'une des revendications précédentes.

7. Pneumatique comprenant une bande de roulement selon la revendication 6.

8. Pneumatique selon la revendication 7, **caractérisé en ce qu'**il s'agit d'un pneumatique radial pour camion et autobus.
